# EUROPÄISCHE PATENTSCHRIFT

(11) **EP 2 197 618 B1**
(45) Veröffentlichungstag und Bekanntmachung des Hinweises auf die Patenterteilung: **23.03.2011**
(21) Anmeldenummer: 08784392.6
(22) Anmeldetag: 24.07.2008
(51) Int. Cl.: B23K 9/025, B66C 23/70, B23K 37/04, B23K 37/053, B23K 9/035, B23K 101/06

(54) **VERFAHREN ZUM LÄNGSNAHTSCHWEISSEN VON KRANAUSLEGERPROFILEN**
METHOD FOR LONGITUDINALLY WELDING CRANE JIB PROFILES
PROCÉDÉ DE SOUDURE LONGITUDINALE DE PROFILÉS DE FLÈCHE DE GRUE

(30) Priorität: 10.09.2007 DE 102007044570
(43) Veröffentlichungstag der Anmeldung: 23.06.2010
(73) Patentinhaber: Terex Demag GmbH, 66482 Zweibrücken (DE)
(72) Erfinder: KIPPING, Ralf, 66484 Battweiler (DE); STRAKE, Markus, 59556 Lippstadt (DE)
(74) Vertreter: Meissner, Peter E.
(86) Internationale Anmeldenummer: PCT/DE2008/001280
(87) Internationale Veröffentlichungsnummer: WO 2009/033443

(56) Entgegenhaltungen:
- DE-A1- 19 711 975
- FR-A- 2 500 348
- JP-A- 4 123 876
- US-A- 1 871 326
- US-A- 1 952 319

## Beschreibung

Die Erfindung betrifft ein Verfahren zum Längsnahtschweißen von Kranauslegerprofilen nach dem Oberbegriff des Anspruchs 1.

Ein solches Verfahren ist aus der DE 197 11 975 A1 bekannt.

Im Mobilkransektor haben sich heute genormte Vergütungsstähle mit Streckgrenzen von 690 MPa bis 1100 MPa durchgesetzt und etabliert. Die Folge ist eine Reduzierung des Konstruktionseigengewichtes, welche sich sehr günstig auf die Nutz- und Achslasten von Mobilkranen auswirkt. Diese hochfesten Feinkornbaustähle ermöglichen durch Leichtbauweise eine wesentliche Verringerung der Herstell- und Betriebskosten in der Mobilkranfertigung.

Die Längsschweißnähte sind dabei in Bereichen geringer Beanspruchung angeordnet. Der üblicherweise angewendete MAG- Schweißprozess erfordert einen mehrlagigen Nahtaufbau. Anlasseffekte verursachen eine Entfestigung im Schweißgut, ebenso gegeben ist die Gefahr von Bindefehlern und nichtmetallischen Einschlüssen sowie eine geringe Produktivität durch den Einsatz des MAG- Prozesses. Zudem sind ein erhöhter Aufwand an Nahtvorbereitungen, Bauteilfixierungen und nachfolgende Richtarbeiten die Folge.

Die Mobilkranhersteller sind gezwungen aufgrund des hohen Kosten- und Wettbewerbsdruckes die schwingend belasteten Teleskopausleger leistungsfähiger zu gestalten und somit auch ständig den Fertigungsprozess zu optimieren. Neue Werkstoffe und der Einsatz neuer Technologien tragen erheblich zu der Prozessoptimierung bei.

Aus der EP 1 193 023 A2 ist ein Verfahren zum Verschweißen von metallischen Werkstücken (Leichtmetallwerkstücken) mittels zwei gegenüberliegend, an einer Schweißnaht angebrachten Schweißstromquellen bekannt.

Die US 5 556 559 A1 beschreibt eine rückseitig angeordnete Abschirmung für das Plasma-Lichtbogenschweißen und aus der JP 04-123876 A ist die Plasma-Stichlochtechnik bekannt, wobei die Abschirmung des rückseitigen Wurzelnahtbereiches durch ein zugeführtes inertes Gas während des Plasma- Schweißprozesses erfolgt. Hier gelangt das Wurzelschutzgas durch eine Vorrichtung (länglich geschlossener Kasten) an den Nahtbereich.

Aufgabe der Erfindung ist es, die Betriebs- und Herstellkosten der Auslegerkästen zu senken.

Gelöst wird diese Aufgabe erfindungsgemäß dadurch dass die obere, eine geringere Blechstärke aufweisende Profilhalbschale mit ihren Längskanten in PC-Position auf der unteren, eine größere Blechstärke aufweisenden Profilhalbschale abgelegt wird,
dass die inneren Längskanten der oberen und der unteren Profilhalbschalen durch einen von innen aufgebrachten Radialdruck fluchtend ausgerichtet werden, so dass sich an der äußeren Längskante ein den unterschiedlichen Blechstärken entsprechender Absatz ausbildet,
dass die beiden Profilhalbschalen in dieser Position geheftet werden und dass anschließend die Profilhalbschalen an ihren äußeren Längskanten durch ein StichlochSchweißen und ein nachfolgendes MAG-Schweißen gefügt werden.

Vorzugsweise erfolgt das Schweißen an beiden äußeren Längskanten der Profilhalbschalen im Wesentlichen zeitgleich.

Weitere Ausgestaltungen ergeben sich aus den Unteransprüchen.

Beim Plasma- Schweissen dient ein Plasma- Strahl als Wärmequelle. Ein Plasma ist ein durch ein Lichtbogen hocherhitztes elektrisch leitfähiges Gas. Im Plasma- Brenner wird durch Hochfrequenzimpulse das durchströmende Plasma- Gas (Argon) vorionisiert und ein Hilfslichtbogen (Pilotlichtbogen) gezündet. Dieser brennt zwischen der negativ gepolten Wolframelektrode und der als Düse ausgebildeten Anode (nicht übertragener Lichtbogen) und ionisiert die Gassäule zwischen Düse und plusgepoltem Werkstück. Ein berührungsloses Zünden des Schweißlichtbogens (übertragener Lichtbogen) ist dadurch möglich. Der für das Schweissen verwendete, übertragene Lichtbogen wird von einem Schutzgasmantel aus einem Gasgemisch von Argon mit geringen Anteilen an Wasserstoff, Helium oder Kohlendioxid umgeben, welches die Schmelze vor Oxidation schützt. Die Einschnürung des Plasma- Lichtbogens durch die wassergekühlte Plasma- Gasdüse zu einer fast zylindrischen Gassäule ergibt eine höhere Energiekonzentration. Diese Eigenschaft der höheren Energiedichte gestattet es beim Stichlochschweißen Bleche mit einer Dicke von 8 mm im Stumpfstoß (1- Naht) einlagig zu schweißen. Der geringere Aufwand für die Nahtvorbereitung, der geringere Bedarf an Zusatzwerkstoff und der anschließend geringere Schweißverzug führen zu erheblichen Produktionsvorteilen.

Der Einsatz der Stichlochtechnik (Plasma keyhole welding method) ermöglicht das Verschweissen von Stumpfstößen (I-/ Y- Naht) um die gebündelte Energie des Plasma-Lichtbogens über die gesamte Werkstückdicke abzugeben und somit das Material zu durchdringen. Es bildet sich eine Schweissöse wobei der Plasma- Strahl auf der Unterseite des Bleches während des Schweißvorgangs sichtbar ist. Das flüssige Schweißgut wird zur Seite gedrängt, fließt durch die Brennerbewegung hinter dem Plasma- Strahl wieder zusammen und bildet so die Schweißnaht.

Die vorliegende Erfindung zum Verschweißen von Kranauslegerprofilen aus hochfesten Feinkornbaustählen besitzt folgende Merkmale:
Die Längsnahtschweißungen der vorgehefteten Halbschalen erfolgen beidseitig parallel in Querposition im I- Stoß mit zwei nacheinander folgenden Brennern, und zwar einem Plasmabrenner und dann einem MAG- Brenner mit minimaler Schweissmaterialzugabe.
Die PC- Position ermöglicht das Schweißen ohne Schweißbadsicherung. Hier können Material- und Fertigungskosten eingespart werden. Eine abstützende Wirkung der flüssigen Schmelze wird zum einen durch das unten liegende, dickere Blech gewährleistet, zum anderen durch die zwar geringe aber doch ausreichende Oberflächenspannung des Schmelzbades.

Die bisher mehrlagigen MAG- Schweißungen der bis zu 8 mm dicken Auslegerkästen können durch den Einsatz des beidseitig parallelen, reinen Plasmastichloch- Prozesses auf eine Lage mit minimaler oder nicht benötigter Materialzugabe reduziert werden. Die Schweißzeit kann somit um ca. 40% reduziert werden. Zudem ist die Einsparung aufwendiger Schweißkantenvorbereitungen (statt HV- / V-Naht einfacher Stumpfstoß) ein zusätzlicher vergünstigender Faktor..

Der kombiniert durchgeführte beidseitige, parallele Plasma- Stichloch- MAG- Prozess ermöglicht es das derzeitig mehrlagige Schweißen von Blechkombinationen der höheren Blechdickenbereiche (HV- Naht) um mindestens zwei Lagen und die Schweißzeit um ca. 50% zu reduzieren.

Die Einschnürung des Plasma- Lichtbogens und die somit konzentrierte Energieeinbringung zeigt geringe Verzugserscheinungen schon während des Schweißvorganges und auch im Anschluss (während der Abkühlphase) daran. Somit ist ein von innen aussteifendes, vorrichtungsfreies (bisheriger Einsatz eines pneumatischen oder hydraulischen inneren Kerns) Schweißen der Kastenprofile möglich.

Die schmale Form (geringe Strahldivergenz) des Lichtbogens (Plasma- Strahl) erfordert die exakte Einhaltung der Brennerposition zum Werkstück und die Einhaltung der ermittelten maximalen Spalttoleranz und des Kantenversatzes von 1 mm. Diese Vorgaben setzen somit ein vollmechanisches Schweißen in einer Vorrichtung voraus.

Die erforderlichen vollmechanischen Schweißungen führt eine für die unterschiedlichen Auslegerabmessungen vorgesehene Plasmaschweißanlage mit einem Quer- und zwei Höhensupporten aus.

Durch die Formierung der Wurzelseite mit einem inerten Gas (Argon), welches mit Hilfe eines parallel zu den Brennern innerhalb des Kastenprofils mitlaufenden, elektromotorisch angetriebenen Formierwagens ist eine Wurzelausbildung hoher Güte zu erzielen.

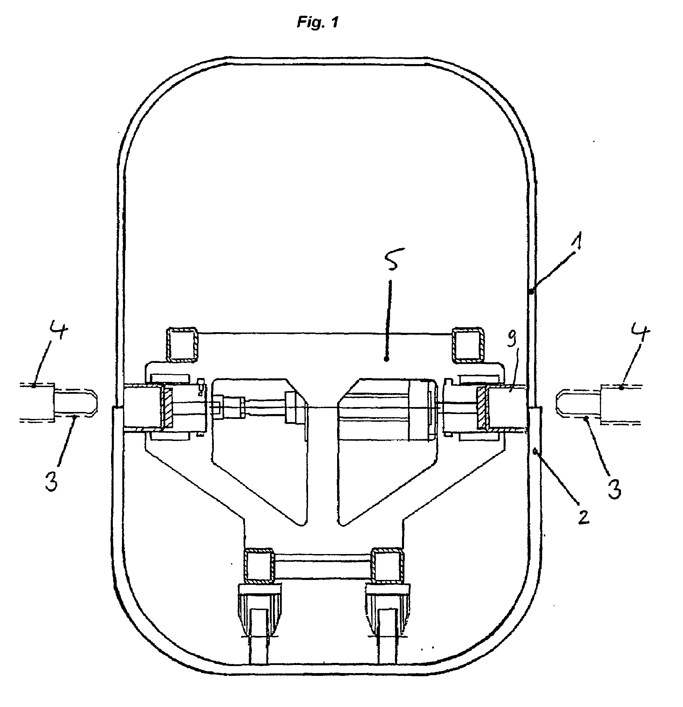

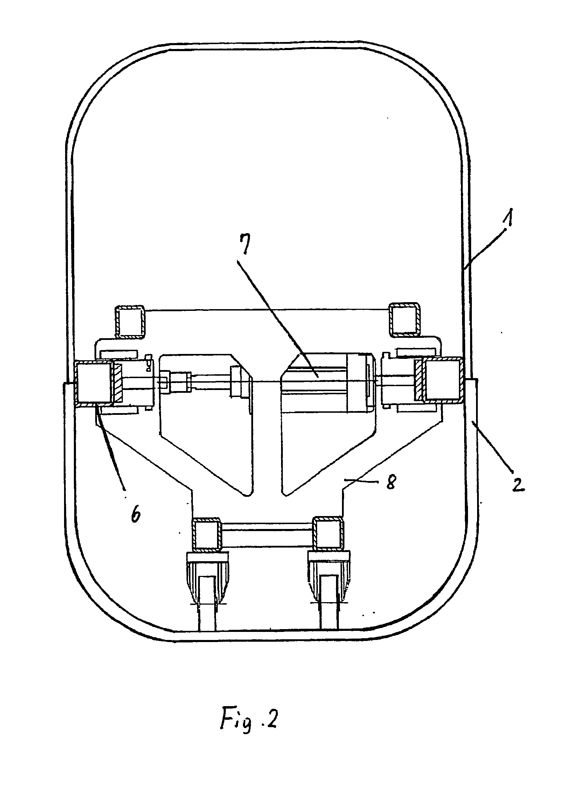

Die Erfindung soll nachfolgend unter Bezug auf die Zeichnung erläutert werden, wobei in diesen ein Querschnitt durch die mit ihren Längskanten aufeinander liegenden Profilhalbschalen mit der Anordnung des Fixierwagens in Figur 2 bzw. des Formierwagens in Figur 1 dargestellt ist.

Bei der nachfolgenden Zeichnungsbeschreibung werden die untere und die obere Profilhalbschale kurz als Unterschale und Oberschale bezeichnet.

Nachdem der Fixierwagen 5 (Figur 2) in die ausgerichtete Unterschale 2 eingebracht und die Oberschale 1 mit Hilfe einer - hier nicht dargestellten - zusätzlichen äußeren, an den Enden der Unterschale befindlichen Einfädelvorrichtung aufgelegt wurde, werden die zwei Pneumatikzylinder 3 betätigt, die jeweils ein Vierkantprofil 4 über ca. 500 mm Länge von innen an die Halbschalen drücken. Diese Profile ermöglichen ohne Kantenversatz eine von innen ausgehende und ausreichend genaue Ausrichtung (Kantenstoß ist fluchtend) der Oberschale zur Unterschale.

Die Schenkel der Oberschale 1 werden nun von außen mit konventionellen Werkzeugen (Schraubzwingen, Einfädelvorrichtung Oberschale auf Unterschale) an die Vierkantrohre 4 gedrückt. Nun erfolgt das Ausrichten der Höhe und Waage der Oberschale 1. Nach dem kurzzeitig genauerem fixieren der Oberschale 1 zur Unterschale 2 mittels Knippstange/Brechstange wird die ausgerichtete Oberschale an die Unterschale in einem WIG-Schweissverfahren geheftet. Sind beide Halbschalen 1 und 2 im Bereich des Fixierwagens 5 mit Heftschweißungen versehen, werden die Druckverhältnisse der Pneumatikzylinder 3 verringert worauf diese in die Ausgangsposition zurückfahren. Über ein Seilsystem wird der Fixierwagen nun in den nächsten Arbeitsbereich verfahren..

Nach diesem Fixiervorgang wird der sogenannte Formierwagen 5 (Figur 1)in die Profilhalbschalen eingeführt, wobei dieser Formierwagen dem Fixierwagen ähnlich ist, sich aber darin unterscheidet, dass keine Vierkantprofile an die Innenkanten der Oberschale bzw. Unterschale angelegt werden, sondern U-förmige Profile 4.

Durch diese Profile 4 wird während des Schweißvorganges ein Schutzgas (Argon) in den Schweißbereich gebracht um wie schon zuvor erwähnt, den rückseitigen Schweißnahtbereich (Wurzel) vor der Atmosphäre zu schützen. Der Formierwagen wird in Höhe der Brenner 3 und 4, also parallel zu ihnen elektromotorisch angetrieben.

Das Schweißen der vorgehefteten Halbschalen 1 und 2 erfolgt, wie zuvor bereits erwähnt beidseitig parallel in Querposition im I-Stoß mit zwei aufeinanderfolgenden Brennern, und zwar einem Plasmabrenner 3 und einem MAG-Brenner 4.

Wie ebenfalls bereits vorher erwähnt, ermöglicht die PC- Position das Schweißen ohne Schweißbadsicherung. Hier können die Material- und Fertigungskosten eingespart werden. Eine abstützende Wirkung der flüssigen Schmelze wird zum einen durch das unten liegende, dickere Blech gewährleistet, zum anderen durch die zwar geringe aber doch ausreichende Oberflächenspannung des Schmelzbades.

## Patentansprüche

1. Verfahren zum Herstellen von geschweißten Kranauslegeprofilen, die aus einer oberen (1) und einer unteren (2) Profilhalbschale zusammengesetzt worden sind,
**dadurch gekennzeichnet,**
**dass** die obere (1), eine geringere Blechstärke aufweisende Profilhalbschale mit ihren Längskanten in PC-Position auf der unteren (2), eine größere Blechstärke aufweisenden Profilhalbschale abgelegt wird,
**dass** die inneren Längskanten der oberen und der unteren Profilhalbschalen durch einen von innen aufgebrachten Radialdruck fluchtend ausgerichtet werden, so dass sich an der äußeren Längskante ein den unterschiedliche Blechstärken entsprechender Absatz ausbildet,
**dass** die beiden Profilhalbschalen (1,2) in dieser Position geheftet werden und
**dass** anschließend die Profilhalbschalen (1,2) an ihren äußeren Längskanten durch ein PlasmaStichloch-Schweißen und ein nachfolgendes MAG-Schweißen miteinander verbunden werden.

2. Verfahren nach Anspruch 1,
**dadurch gekennzeichnet,**
**dass** das Schweißen an beiden äußeren Längskanten der Pofilhalbschalen (1,2) im Wesentlichen zeitgleich erfolgt.

3. Verfahren nach einem der vorstehenden Ansprüche,
**dadurch gekennzeichnet,**
**dass** während des Schweißens von der Außenseite der Profilhalbschalen (1,2) im Bereich der inneren Längskanten ein Schutzgas aufgebracht wird.

## Claims

1. Process for the production of welded crane jib profiles that have been assembled from an upper (1) and a lower (2) profile shell,
**characterised in that**
the upper (1) profile shell having a smaller sheet thickness is laid with its longitudinal edges in PC position on the lower (2) profile shell having a larger sheet thickness, that the inner longitudinal edges of the upper and the lower profile shells are aligned flush by means of a radial pressure applied from the inside, so that a shoulder corresponding to the different sheet thicknesses is formed on the outer longitudinal edge,
that the two profile shells (1, 2) are fastened in this position, and
that the profile shells (1, 2) are then joined together at their outer longitudinal edges by a plasma plug welding operation and a subsequent MAG welding operation.

2. Process according to claim 1, **characterised in that** the welding is conducted on both outer longitudinal edges of the profile shells (1, 2) substantially at the same time.

3. Process according to one of the preceding claims, **characterised in that** during the welding a protective gas is applied from the outside of the profile shells (1, 2) in the region of the inner longitudinal edges.

## Revendications

1. Procédé de fabrication de profilés soudés de flèches de grues, qui ont été composés d'une demi-coque de profilé supérieure (1) et d'une demi-coque de profilé inférieure (2),
**caractérisé en ce que**
la demi-coque de profilé supérieure (1) présentant une plus faible épaisseur de tôle est disposée avec ses arêtes longitudinales en position PC sur la demi-coque de profilé inférieure (2) présentant une épaisseur de tôle plus élevée,
les arêtes longitudinales internes des demi-coques de profilé supérieure et inférieure sont alignées par pression radiale appliquée de l'intérieur de manière à former sur l'arête longitudinale externe un talon correspondant aux différentes épaisseurs de tôle,
les deux demi-coques de profilé (1, 2) sont assemblées dans cette position et
les demi-coques de profilé (1, 2) sont ensuite raccordées l'une à l'autre sur leurs arêtes longitudinales externes par un soudage en bouchon au plasma et un soudage MAG suivant.

2. Procédé selon la revendication 1,
**caractérisé en ce que**
le soudage sur les deux arêtes longitudinales externes des demi-coques de profilé (1, 2) se fait sensiblement en même temps.

3. Procédé selon l'une quelconque des revendications précédentes,
**caractérisé en ce que**,
pendant le soudage de l'extérieur des demi-coques de profilé (1, 2), on applique un gaz protecteur dans la zone des arêtes longitudinales internes.
